# EUROPEAN PATENT APPLICATION

(11) **EP 2 752 963 A1**
(43) Date of publication of application: **09.07.2014**
(21) Application number: 12828977.4
(22) Date of filing: 31.08.2012
(51) Int. Cl.: H02J 7/00, H01M 10/46, H02J 17/00

(54) **VEHICLE-MOUNTED CHARGING DEVICE**

(30) Priority: 02.09.2011 JP 2011191346
(71) Applicant: Panasonic Corporation, Osaka 571-8501 (JP)
(72) Inventor: NAKAYAMA, Tsukasa, Osaka-shi, Osaka 540-6207 (JP); ARAKI, Yukihiro, Osaka-shi, Osaka 540-6207 (JP); SEKI, Toshiaki, Osaka-shi, Osaka 540-6207 (JP)
(74) Representative: Vigand, Philippe
(86) International application number: PCT/JP2012/005530
(87) International publication number: WO 2013/031236

(57) **Abstract**

A charging coil body 8 includes a base 17 and a charging coil 18 mounted on the base 17. The base 17 has long-side side through-holes 19 penetrating toward long-sides of the rectangular installation area 5 and short-side side through-holes 20 penetrating toward short-sides of the rectangular installation area 5. Both end portions of a first driving shaft 21 passing through the long-side side through-holes 19 are connected to the first pinions 22 which are meshed with the long racks 11. Both end portions of a second driving shaft 23 passing through the short-side side through-holes 20 are connected to the second pinions 24 which are meshed with the short racks 14.

## Description

### Technical Field

The present invention relates to an in-vehicle charger to be mounted to a vehicle.

### Background Art

With the widespread use of mobile devices, an in-vehicle charger has been suggested which allows the mobile devices to be charged also in the vehicle (see Patent Document 1, for example).

Specifically, the in-vehicle charger includes a basal plate having a rectangular installation area on a surface thereof, a charging coil body movably disposed on the surface of the rectangular installation area of the basal plate, a long-side side driving body provided at long-sides side of the rectangular installation area and a short-side side driving body provided at short-sides side of the rectangular installation area. By this configuration, the in-vehicle charger is intended to effectively charge a mobile device by moving the charging coil body in accordance with an installation location of the mobile device.

### Related Art Documents

### Patent Document

### Summary of the Invention

### Problems to be Solved by the Invention

Patent Document 1: JP-A-2009-247194

In the related art above described, since the charging coil body is moved in accordance with the installation location of the mobile device, charging is performed in a state where a charging coil of the mobile device and the charging coil body are opposed to each other. As a result, an efficient charging is performed.

In the in-vehicle charger, there is a problem that a vibration due to running of a vehicle or an inertial force due to acceleration or deceleration of the vehicle, for example, affects the charging coil body and therefore the charging coil body itself is unintentionally moved, resulting in a decrease of a charging efficiency.

That is, the in-vehicle charger in the related art has a configuration that a driving motor provided in the driving body to drive the charging coil body is also moved together with the charging coil body. When the driving motor is moved integrally with the charging coil body in such a manner, a weight of the charging coil body is substantially heavier and therefore the charging coil can be easily affected by the inertial force.

Accordingly, an object of the present invention is to suppress a decrease in a charging efficiency.

### Means for Solving the Problems

A subject matter of the present invention comprises: a basal plate having a rectangular installation area; a charging coil body movably disposed above the rectangular installation area of the basal plate; a long-side side driving body disposed at long-sides side of the rectangular installation area; and a short-side side driving body disposed at short-sides side of the rectangular installation area, wherein the long-side side driving body includes: long racks that extends in a long-side direction of the rectangular installation area; first pinions adapted to roll with respect to the long racks; a first driving shaft connected to the first pinions; and a long-side side motor that generates a driving force to rotate the first pinions, a position of the long-side side motor being fixed with respect to the basal plate, wherein the short-side side driving body includes: short racks that extends in a short-side direction of the rectangular installation area; second pinions adapted to roll with respect to the short racks; a second driving shaft connected to the second pinions; and a short-side side motor that generates a driving force to rotate the second pinions, a position of the short-side side motor is fixed with respect to the basal plate, wherein the charging coil body includes a base and a charging coil mounted to the base, and wherein the base has long-side side through-holes through which the first driving shaft passes toward the long-sides of the rectangular installation area and short-side side through-holes through which the second driving shaft passes toward the short-sides of the rectangular installation area. By this subject matter of the present invention, an advantageous that a decrease in a charging efficiency can be suppressed is obtained.

### Advantageous Effects of the Invention

According to the present invention, it is possible to suppress a decrease in a charging efficiency.

### Brief Description of the Drawings

Fig. 1 is a perspective view showing an in-vehicle charger according to a first embodiment of the present invention.
Fig. 2 is a perspective view showing the in-vehicle charger in a state where an upper plate thereof is removed.
Fig. 3 is a perspective view showing the in-vehicle charger in a state where the upper plate and a portion of side plates thereof are removed.
Fig. 4 is a perspective view showing a driving mechanism for the charging coil body of the in-vehicle charger.
Fig. 5 is a perspective view form below, showing the driving mechanism for the charging coil body of the in-vehicle charger.
Fig. 6 is a perspective view from below, showing the charging coil body of the in-vehicle charger.
Fig. 7 is a control block diagram of the in-vehicle charger.
Fig. 8 is a flowchart showing an operation of the in-vehicle charger.

### Mode for Carrying out the Invention

An in-vehicle charger according to one aspect of the present invention includes a basal plate having a rectangular installation area, a charging coil body movably disposed above the rectangular installation area of the basal plate, a long-side side driving body disposed at long-sides side of the rectangular installation area and a short-side side driving body disposed at short-sides side of the rectangular installation area. The long-side side driving body includes long racks extending in a long-side direction of the rectangular installation area, first pinions being capable of rolling with respect to the long racks, a first driving shaft connected to the first pinions and a long-side side motor whose position is fixed with respect to the basal plate and which generates a driving force to rotate the first pinions. The short-side side driving body comprises short racks extending in a short-side direction of the rectangular installation area, second pinions being capable of rolling with respect to the short racks, a second driving shaft connected to the second pinions and a short-side side motor whose position is fixed with respect to the basal plate and which generates a driving force to rotate the second pinions. The charging coil body comprises a base and a charging coil mounted to the base. The base is provided with long-side side through-holes which penetrate toward the long-sides of the rectangular installation area and through which the first driving shaft passes and short-side side through-holes which penetrate toward the short-sides of the rectangular installation area and through which the second driving shaft passes.

Further, the long-side side through-holes are provided on the side of the charging coil of the base and the short-side side through-holes are provided on the side of the basal plate of the base. And, the first driving shaft and the second driving shaft are arranged in a direction perpendicular to each other and overlapped in such a way that positions thereof in a thickness direction of the charging coil body are deviated.

Further, the short-side side through-holes have groove shape which is opened to the basal plate.

Further, one of a pair of the short-side side through-holes formed in a groove shape has an opening diameter larger than the other thereof.

Further, the in-vehicle charger includes a long-side side feeding screw connected to a driving part of the long-side side motor, a first nut block rotatably holding the first driving shaft is provided on the side of the long-side side feeding screw of the first pinions and is meshed with the long-side side feeding screw, a driving force of the long-side side motor is transmitted to the first pinions and the first driving shaft and the first pinions are rotated and rolled on the long racks in accordance with the rotation of the long-side side feeding screw and the long-side side motor.

Further, the in-vehicle charger includes a short-side side feeding screw connected to a driving part of the short-side side motor, a second nut block rotatably holding the second driving shaft is provided on the side of the short-side side feeding screw of the second pinions and is meshed with the short-side side feeding screw, a driving force of the short-side side motor is transmitted to the second pinions and the second driving shaft and the second pinions are rotated and rolled on the short racks in accordance with the rotation of the short-side side feeding screw and the short-side side motor.

Further, the long racks are disposed on both opposing long-sides of the rectangular installation area, the first pinions are provided on both ends of the first driving shaft and each of the first pinions is rollably meshed with each of the long racks at the both long-sides.

Further, the short racks are disposed on both opposing short-sides of the rectangular installation area, the second pinions are provided on both ends of the second driving shaft and each of the second pinions is rollably meshed with each of the short racks at the both short-sides.

Further, the in-vehicle charger of the present invention may include a basal plate having a rectangular installation area on a surface thereof, a charging coil body movably disposed on the surface of the rectangular installation area of the basal plate, a long-side side driving body provided at long-sides side of the rectangular installation area and a short-side side driving body provided at short-sides side of the rectangular installation area. The long-side side driving body may include long racks disposed on both long-sides of the rectangular installation area, a long-side side feeding screw disposed on at least one of the long-sides and a long-side side motor connected to the long-side side feeding screw. Further, the short-side side driving body may include short racks disposed on both short-sides of the rectangular installation area, a short-side side feeding screw disposed on at least one of the short-sides and a short-side side motor connected to the short-side side feeding screw. The charging coil body may include the base and the charging coil mounted to the base. The base may be provided with long-side side through-holes which penetrate toward the long-sides of the rectangular installation area and short-side side through-holes which penetrate toward the short-sides of the rectangular installation area. The first pinions may be provided on both end portions of the first driving shaft passing through the long-side side through-holes and are meshed with the long racks. The second pinions may be provided on both end portions of the second driving shaft passing through the short-side side through-holes and are meshed with the short racks.

By this configuration, the weight of the charging coil body 8 becomes lighter and thus the charging coil is hardly affected by an inertial force, so that an opposing relationship of the charging coil of the mobile phone and the charging coil body is hardly deviated and therefore it is possible to suppress the decrease in the charging efficiency.

Hereinafter, an illustrative embodiment of the present invention will be described with reference to the drawings.

### (First Embodiment)

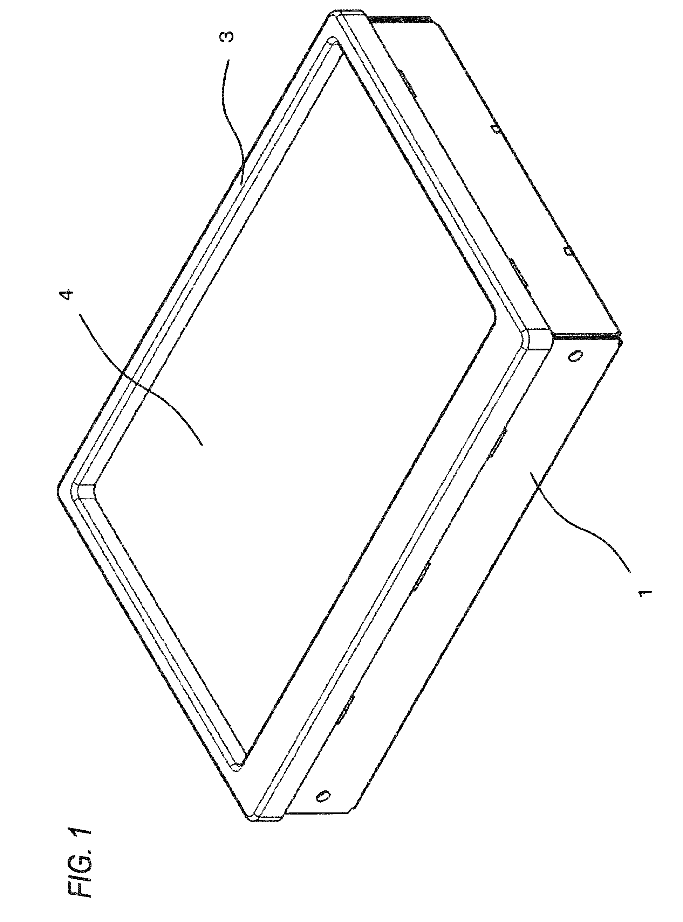

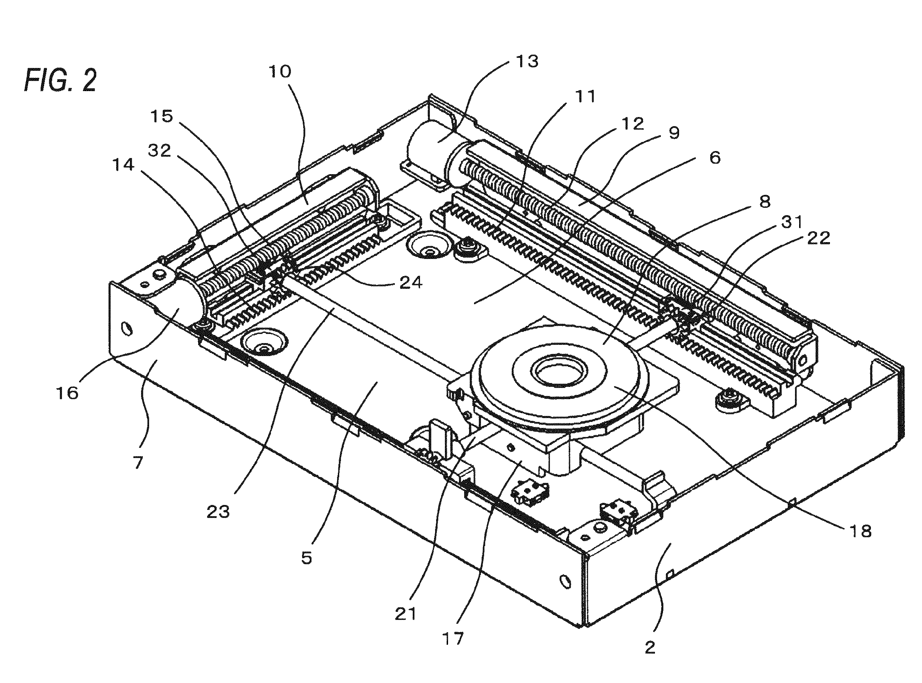

By referring to Fig. 1, a reference numeral 1 denotes a body case and the body case 1 is configured by mounting an upper case 3 (Fig. 1) with an open lower surface on a lower case 2 (Fig. 2) with an open upper surface.

Further, the upper case 3 includes an upper plate 4 on which a mobile device is placed when charging is performed.

Meanwhile, the lower case 2 includes a basal plate 6 having a rectangular installation area 5 on a surface thereof and side plates 7 covering an outer periphery of the basal plate 6.

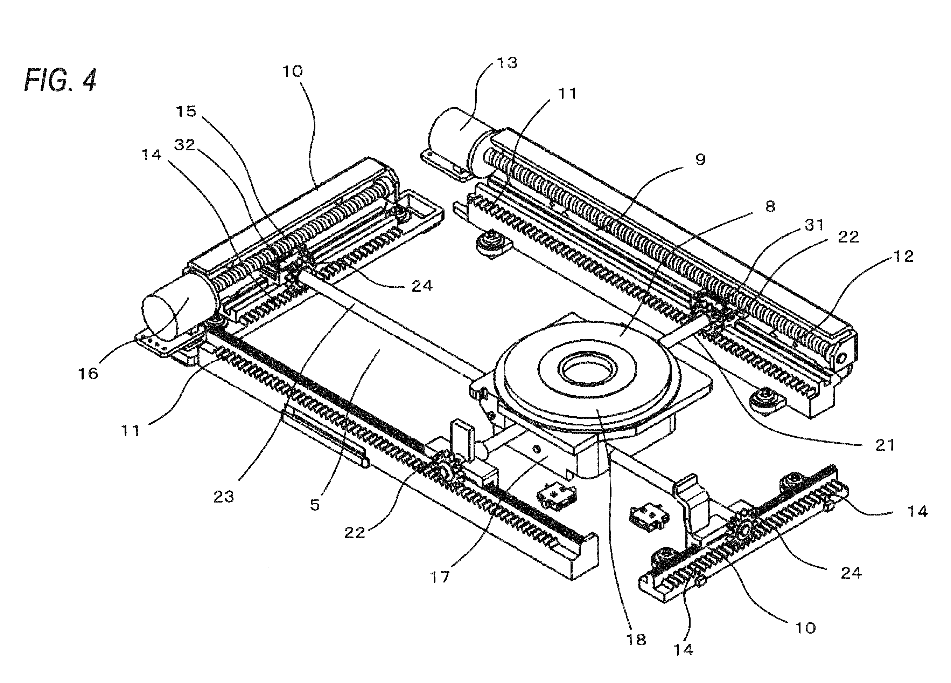

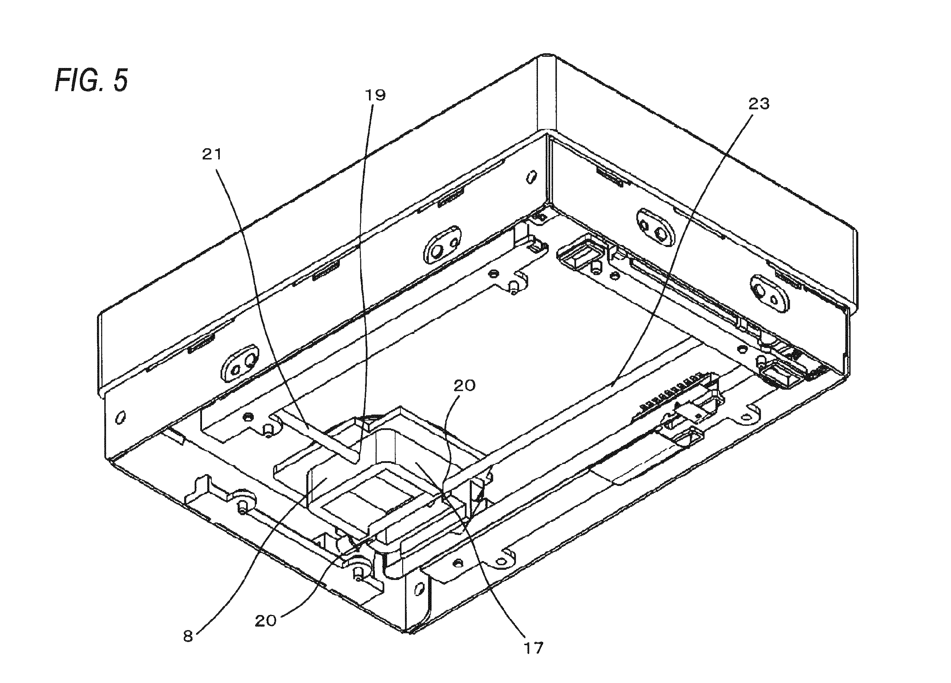

Further, a charging coil body 8 is movably disposed on the surface of the rectangular installation area 5 of the lower case 2. In addition, as shown in Fig. 4 and Fig. 5, a long-side side driving body 9 is arranged at long-sides side of the rectangular installation area 5 and a short-side side driving body 10 is arranged at short-sides side of the rectangular installation area 5. The long-side side driving body 9 and the short-side side driving body 10 are fixed on the basal plate 6 of the lower case 2. Meanwhile, in the rectangular installation area 5, a long-side direction is defined as Y axis direction and a short-side direction perpendicular to the long-side direction is defined as X axis direction.

The long-side side driving body 9 includes long racks 11 disposed on both opposing long-sides of the rectangular installation area 5, a long-side side feeding screw 12 disposed on at least one of the long-sides and a long-side side motor 13 connected to the long-side side feeding screw 12. The long racks 11 extend in the long-side direction of the rectangular installation area 5 and first pinions 22 are rollably meshed with the long racks 11. As the long-side side motor 13 is rotated, the long-side side feeding screw 12 connected to a driving part of the motor is rotated together and a driving force is generated. And, the first pinions 22 are rotated and rolled on the long racks 11 by the driving force. Here, the position of the long-side side motor 13 is directly or indirectly fixed with respect to the basal plate 6 and a driving force of the long-side side motor 13 is transmitted to the first pinions 22 via the long-side side feeding screw 12, so that the first pinions 22 are moved along the long racks 11 while being rotated.

Further, the short-side side driving body 10 includes short racks 14 disposed on both opposing short-sides of the rectangular installation area 5, a short-side side feeding screw 15 disposed on at least one of the short-sides and a short-side side motor 16 connected to the short-side side feeding screw 15. The short racks 14 extend in the short-side direction of the rectangular installation area 5 and second pinions 24 are rollably meshed with the short racks 14. As the short-side side motor 16 is rotated, the short-side side feeding screw 15 connected to a driving part of the motor is rotated together and a driving force is generated. And, the second pinions 24 are rotated and rolled on the short racks 14 by the driving force. Here, the position of the short-side side motor 16 is directly or indirectly fixed with respect to the basal plate 6 and a driving force of the short-side side motor 16 is transmitted to the second pinions 24 via the short-side side feeding screw 15, so that the second pinions 24 are moved along the short racks 14 while being rotated.

Furthermore, the charging coil body 8 includes a square-shaped base 17 and a circular charging coil 18 mounted on the base 17, as shown in Fig. 2 to Fig. 4.

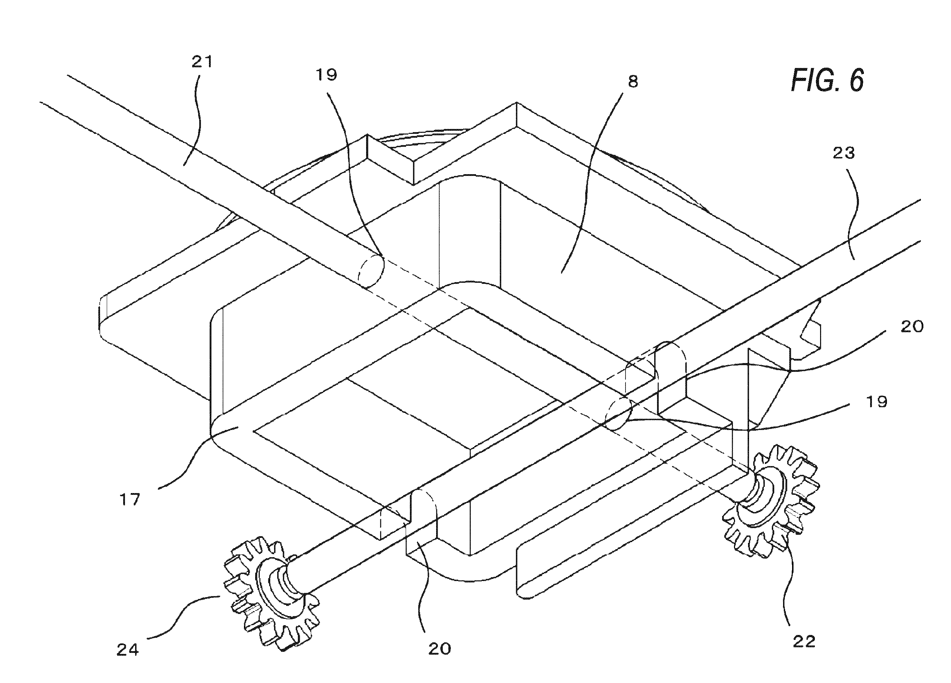

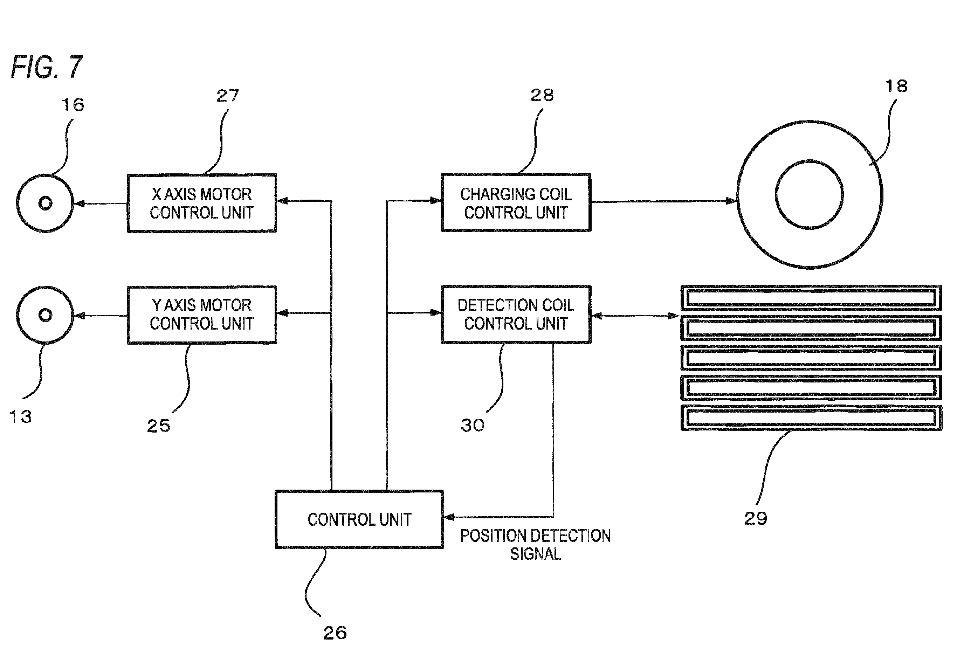

Further, as shown in Fig. 6 and Fig. 7, the base 17 has long-side side through-holes 19 penetrating toward the long-sides of the rectangular installation area 5 and short-side side through-holes 20 penetrating toward the short-sides of the rectangular installation area 5.

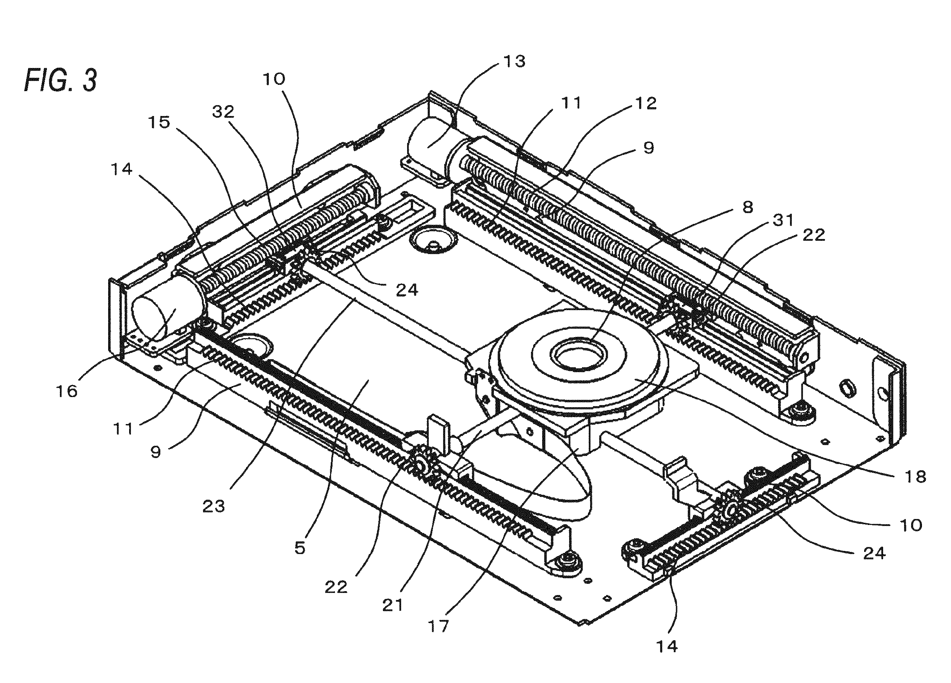

And, as shown in Fig.3 and Fig. 4, both end portions of a first driving shaft 21 passing through the long-side side through-holes 19 are connected to the first pinions 22 which are meshed with the long racks 11 so as to be rolled along an extension direction of the rack. The long racks 11 and the long-side side feeding screw 12 are disposed substantially parallel to each other and a first nut block 31 is provided on the side of the long-side side feeding screw 12 of the first pinions 22. The first nut block 31 holds the first driving shaft 21 in a rotatable state and is meshed with the long-side side feeding screw 12 to transmit a driving force of the long-side side motor 13 to the long-side side driving body 9 including the first pinions 22 and the first driving shaft 21. As the first pinions 22 are rotated by the driving force of the long-side side motor 13, the first driving shaft 21 is moved in the long-side direction while being rotated in conjunction with the first pinions 22. Here, the first pinions 22 may be configured by a two-stage gear and the first pinions 22 may be directly meshed with the long-side side feeding screw 12.

Further, both end portions of a second driving shaft 23 passing through the short-side side through-holes 20 are connected to the second pinions 24 which are meshed with the short racks 14 so as to be rolled along an extension direction of the rack. The short racks 14 and the short-side side feeding screw 15 are disposed substantially parallel to each other and a second nut block 32 is provided on the side of the short-side side feeding screw 15 of the second pinions 24. The second nut block 32 holds the second driving shaft 23 in a rotatable state and is meshed with the short-side side feeding screw 15 to transmit a driving force of the short-side side motor 16 to the short-side side driving body 10 including the second pinions 24 and the second driving shaft 23. As the second pinions 24 are rotated by the driving force of the short-side side motor 16, the second driving shaft 23 is moved in the short-side direction while being rotated in conjunction with the second pinions 24. Here, the second pinions 24 may be configured by a two-stage gear and the second pinions 24 may be directly meshed with the short-side side feeding screw 15.

As shown in Fig. 5 and Fig. 6, the long-side side through-holes 19 are disposed on the side of the charging coil 18 of the base 17 and the short-side side through-holes 20 are disposed on the side of the basal plate 6 of the base 17. Out of these through-holes, each of the short-side side through-holes 20 has a groove shape which is opened to the basal plate 6. For example, each of the short-side side through-hole 20 is formed in a U-shaped groove.

Meanwhile, one of the short-side side through-holes 20 formed in a groove shape has an opening diameter larger than the other thereof, which will be described in detail later.

Fig. 7 shows a control block of the in-vehicle charger. Here, the long-side side motor 13 performs a Y axis direction driving and is connected to a control unit 26 via a Y axis motor control unit 25.

Similarly, the short-side side motor 16 performs an X axis direction driving and is connected to the control unit 26 via an X axis motor control unit 27.

Further, the charging coil 18 is connected to the control unit 26 via a charging coil control unit 28.

Further, a position detection coil 29 is connected to the control unit 26 via a detection coil control unit 30 and is intended to detect the position of a charging coil of a mobile device installed on the upper plate 4.

Since a method to detect the position of the charging coil of the mobile device using the position detection coil 29 and the detection coil control unit 30 is disclosed in detail in the above-described Patent Document 1, a detailed description thereof is omitted herein for convenience in explanation. The position detection coil 29 is configured in such a way that a plurality of coils is arranged in parallel at predetermined intervals in X axis and Y axis directions in the rectangular installation area 5. The detection coil control unit 30 supplies a pulse signal to each coil of the position detection coil 29, detects the position of the charging coil depending on the level of an echo signal for the pulse signal and outputs a position detection signal.

The control unit 26 is configured by an information processing device such as a micro-computer, for example and each function thereof is realized by executing a predetermined software program. Here, the control unit 26 may have each function of the Y axis motor control unit 25, the X axis motor control unit 27, the charging coil control unit 28 and the detection coil control unit 30.

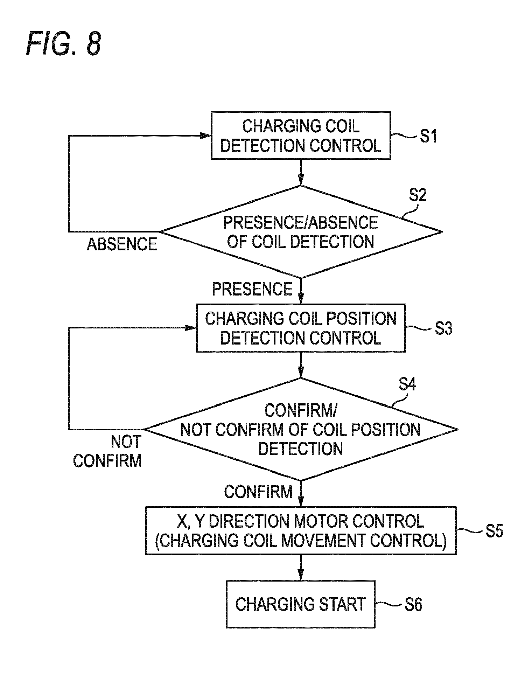

In the above configuration, when a mobile device is installed on the upper plate 4 in order to charge the mobile device, the control unit 26 detects the position of the charging coil of the mobile device using the position detection coil 29 and the detection coil control unit 30 (S1, S2, S3, S4 in Fig. 8). At this time, the control unit 26 instructs the detection coil control unit 30 to execute a charging coil detection control (S1) and determines the presence or absence of the detection of the charging coil (S2). Further, the control unit 26 executes a charging coil position detection control (S3) and determines whether the position detection of the charging coil was confirmed (S4). From the detection coil control unit 30, a position detection signal is inputted to the control unit 26. Based on the result of the charging coil position detection, the control unit 26 drives the Y axis motor control unit 25 and the X axis motor control unit 27 so as to move the charging coil 18 to a position opposing to the charging coil of the mobile device, so that the motor control (charging coil movement control) in X and Y directions is performed (S5 in Fig.8).

And, when the position of the charging coil 18 is confirmed, the control unit 26 supplies power to the charging coil 18 via the charging coil control unit 28, so that the charging is started (S6 in Fig. 8).

In the above operation, the charging coil 18 is driven by the long-side side motor 13 and the short-side side motor 16. In this case, either one of these motors may be operated or both motors may be simultaneously operated.

First, the long-side side motor 13 is described. As the long-side side motor 13 is driven, the long-side side feeding screw 12 is rotated and therefore the first pinions 22 meshed with the long-side side feeding screw are rotated.

At this time, since both first pinions 22 at both ends of the first driving shaft 21 are in a state of being rolled on the long racks 11, a very smooth rolling movement is performed.

Further, since the first driving shaft 21 is in a state of passing through the long-side side through-holes 19 provided in the base 17 of the charging coil body 8, as described above, the base 17 of the charging coil body 8, that is, the charging coil 18 is moved in a moving direction of the first pinions 22 described above.

Further, as the short-side side motor 16 is driven, the short-side side feeding screw 15 is rotated and therefore the second pinions 24 meshed with the short-side side feeding screw are rotated.

At this time, since both second pinions 24 at both ends of the second driving shaft 23 are in a state of being rolled on the short racks 14, a very smooth rolling movement is performed.

Further, since the second driving shaft 23 is in a state of passing through the short-side side through-holes 20 provided in the base 17 of the charging coil body 8, as described above, the base 17 of the charging coil body 8, that is, the charging coil 18 is moved in a moving direction of the second pinions 24 described above.

In such a moving situation of the charging coil 18, since each of the short-side side through-holes 20 provided on the base 17 of the charging coil body 8 has a groove shape which is opened to the basal plate 6, as described above, the movement of the charging coil 18 is smoothly performed. At this time, the stress in a direction perpendicular to a rotation axis of the second driving shaft 23 is absorbed by the groove shape of each of the short-side side through-holes 20, so that the charging coil body 8 can be smoothly moved.

Further, as shown in Fig. 5 and Fig. 6, the long-side side through-holes 19 provided on the base 17 of the charging coil body 8 are arranged on the side of the charging coil 18 of the base 17 and has a shape to penetrate the base 17 toward both long racks 11. And, the short-side side through-holes 20 are arranged on the side of the base 17 opposite to the charging coil 18, i.e., on the side of the basal plate 6 of the base 17 and has a shape to penetrate the base 17 toward both short racks 14. Further, each of the short-side side through-hole 20 of the base 17 has a groove shape which is opened to the basal plate 6. In this way, the present embodiment has a configuration that the first driving shaft 21 and the second driving shaft 23 are arranged in a direction perpendicular to each other and overlapped in such a way that positions thereof in a thickness direction of the charging coil body 8 are deviated. Further, the present embodiment has a configuration that the short-side side through-holes 20 having the groove shape are adapted to receive the second driving shaft 23 which is longer. Since the second driving shaft 23 can be slightly displaced in a direction perpendicular to a rotation axis thereof by the groove shape, the friction during the rotation of the driving shaft can be reduced. Consequently, it is possible to prevent the charging coil body 8 from being non-smoothly moved due to the friction.

As a result, the charging coil 18 can be smoothly moved toward the long-side side and the short-side side.

Furthermore, under this situation, since one of the short-side side through-holes 20 formed in a groove shape has an opening diameter larger than the other thereof, the charging coil 18 can be smoothly moved to the long-side side and the short-side side, also from this point. In a case where one of two opposing short-side side through-holes 20 has an opening diameter larger than the other thereof, for example, one short-side side through-hole 20 away from the short-side side driving body 10, i.e., one short-side side through-hole (away from a driving source) located at a downstream side in a transmission direction of a driving force from the short-side side driving body 10 has an opening diameter larger than the other. By doing so, since the stress in a direction perpendicular to a rotation axis of the second driving shaft 23 is absorbed, not only it is possible to smoothly move the charging coil body 8 and but also it is possible to reduce the transmission loss of the driving force from the short-side side driving body 10. Similarly, one of the long-side side through-holes 19 may be formed in an elongate hole and have an opening diameter larger than the other thereof.

That is, since the longer second driving shaft 23 is in a state of passing through the short-side side through-holes 20 as shown in Fig. 5 and Fig. 6 and a deformation amount of the longer second driving shaft 23 is larger than that of the shorter first driving shaft 21, it is intended to allow a smooth operation by absorbing the deformation. By forming the through-holes to receive the longer driving shaft (in which a deformation amount when driving is large and a friction is likely to occur) in groove shape, higher effect is obtained.

As described above, in the present embodiment, the long-side side motor 13 and the short-side side motor 16 are fixed to the lower case 2 and separated from the charging coil body 8, in view of the movement. When the charging coil body 8 is driven, a moving part is only composed of the charging coil 18 and the base 17, the first driving shaft 21 and the first pinions 22, and the second driving shaft 23 and the second pinions 24. As a result, the weight of the charging coil body 8 becomes lighter and thus the charging coil is hardly affected by an inertial force, so that an opposing relationship of the charging coil of the mobile phone and the charging coil body is hardly deviated and therefore it is possible to suppress the decrease in the charging efficiency.

As described above, the in-vehicle charger according to the illustrative embodiment of the present invention includes the long-side driving body provided at long-sides side of the rectangular installation area of the basal plate and the short-side driving body provided at short-sides side of the rectangular installation area. The long-side side driving body includes long racks disposed on both long-sides of the rectangular installation area, a long-side side feeding screw disposed on at least one of the long-sides and a long-side side motor connected to the long-side side feeding screw. Further, the short-side side driving body includes short racks disposed on both short-sides of the rectangular installation area, a short-side side feeding screw disposed on at least one of the short-sides and a short-side side motor connected to the short-side side feeding screw. The charging coil body includes the base and the charging coil mounted to the base. The base is provided with the long-side side through-holes which penetrate toward the long-sides of the rectangular installation area and short-side side through-holes which penetrate toward the short-sides of the rectangular installation area. The first pinions are provided on both end portions of the first driving shaft passing through the long-side side through-holes and are meshed with the long racks. The second pinions are provided on both end portions of the second driving shaft passing through the short-side side through-holes and are meshed with the short racks. Accordingly, the long-side side motor and the short-side side motor are separated from the charging coil body, in view of the movement. As a result, the weight of the charging coil body becomes lighter and thus the charging coil is hardly affected by an inertial force, so that it is possible to suppress the decrease in the charging efficiency.

Accordingly, the present invention is expected to be utilized as the in-vehicle charger.

Although the present invention has been described in detail with reference to particular illustrative embodiments, the present invention is not limited to the illustrative embodiments and it is obvious to those skilled in the art that the illustrative embodiments can be variously modified and combined without departing a spirit and a scope of the present invention.

This application is based upon Japanese Patent Application (Patent Application No. 2011-191346) filed on September 2, 2011 and the contents of which are incorporated herein by reference.

### Industrial Applicability

The present invention has an effect to suppress a decrease in a charging efficiency and is useful as an in-vehicle charger or the like to be mounted to a vehicle.

### Description of Reference Numerals and Signs

- 1: body case
- 2: lower case
- 3: uppercase
- 4: upper plate
- 5: rectangular installation area
- 6: basal plate
- 7: side plate
- 8: charging coil body
- 9: long-side side driving body
- 10: short-side side driving body
- 11: long rack
- 12: long-side side feeding screw
- 13: long-side side motor
- 14: short rack
- 15: short-side side feeding screw
- 16: short-side side motor
- 17: base
- 18: circular charging coil
- 19: long-side side through-hole
- 20: short-side side through-hole
- 21: first driving shaft
- 22: first pinion
- 23: second driving shaft
- 24: second pinion
- 25: Y axis motor control unit
- 26: control unit
- 27: X axis motor control unit
- 28: charging coil control unit
- 29: position detection coil
- 30: detection coil control unit
- 31: first nut block
- 32: second nut block

## Claims

1. An in-vehicle charger comprising:
a basal plate having a rectangular installation area;
a charging coil body movably disposed above the rectangular installation area of the basal plate;
a long-side side driving body disposed at long-sides side of the rectangular installation area; and
a short-side side driving body disposed at short-sides side of the rectangular installation area,
wherein the long-side side driving body includes:
long racks that extends in a long-side direction of the rectangular installation area;
first pinions adapted to roll with respect to the long racks;
a first driving shaft connected to the first pinions; and
a long-side side motor that generates a driving force to rotate the first pinions, a position of the long-side side motor being fixed with respect to the basal plate;
wherein the short-side side driving body includes:
short racks that extends in a short-side direction of the rectangular installation area;
second pinions adapted to roll with respect to the short racks;
a second driving shaft connected to the second pinions; and
a short-side side motor that generates a driving force to rotate the second pinions, a position of the short-side side motor is fixed with respect to the basal plate;
wherein the charging coil body includes a base and a charging coil mounted to the base; and
wherein the base has long-side side through-holes through which the first driving shaft passes toward the long-sides of the rectangular installation area and short-side side through-holes through which the second driving shaft passes toward the short-sides of the rectangular installation area.

2. The in-vehicle charger according to claim 1, wherein the long-side side through-holes are provided on the side of the charging coil of the base and the short-side side through-holes are provided on the side of the basal plate of the base; and
wherein the first driving shaft and the second driving shaft are arranged in a direction perpendicular to each other and overlapped so that positions of the first driving shaft and the second driving shaft in a thickness direction of the charging coil body are deviated.

3. The in-vehicle charger according to claim 2, wherein each of the short-side side through-holes has groove shape which is opened to the basal plate.

4. The in-vehicle charger according to claim 3, wherein one of a pair of the short-side side through-holes formed in the groove shape has an opening diameter larger than an opening diameter of the other of the pair of the short-side side through-holes.

5. The in-vehicle charger according to any one of claims 1 to 4, wherein the in-vehicle charger includes a long-side side feeding screw connected to a driving part of the long-side side motor, a first nut block rotatably holding the first driving shaft is provided on the side of the long-side side feeding screw of the first pinions and is meshed with the long-side side feeding screw, a driving force of the long-side side motor is transmitted to the first pinions and the first driving shaft, and the first pinions are rotated and rolled on the long racks in accordance with the rotation of the long-side side feeding screw and the long-side side motor.

6. The in-vehicle charger according to any one of claims 1 to 4, wherein the in-vehicle charger includes a short-side side feeding screw connected to a driving part of the short-side side motor, a second nut block rotatably holding the second driving shaft is provided on the side of the short-side side feeding screw of the second pinions and is meshed with the short-side side feeding screw, a driving force of the short-side side motor is transmitted to the second pinions and the second driving shaft, and the second pinions are rotated and rolled on the short racks in accordance with the rotation of the short-side side feeding screw and the short-side side motor.

7. The in-vehicle charger according to any one of claims 1 to 4, wherein the long racks are disposed on both opposing long-sides of the rectangular installation area, the first pinions are provided on both ends of the first driving shaft, and each of the first pinions is rollably meshed with each of the long racks at the both long-sides.

8. The in-vehicle charger according to any one of claims 1 to 4, wherein the short racks are disposed on both opposing short-sides of the rectangular installation area, the second pinions are provided on both ends of the second driving shaft, and each of the second pinions is rollably meshed with each of the short racks at the both short-sides.
